# EUROPEAN PATENT SPECIFICATION

(11) **EP 1 727 433 B1**
(45) Date of publication and mention of the grant of the patent: **23.04.2008**
(21) Application number: 05701325.2
(22) Date of filing: 01.02.2005
(51) Int. Cl.: A21D 2/16, A21D 13/00

(54) **ANTI-STALING COMPOSITION AND BAKERY PRODUCTS COMPRISING THIS COMPOSITION**
ALTBACKENWERDEN VERHINDERNDE ZUBEREITUNG UND DIESE ZUBEREITUNG ENTHALTENDE BACKWAREN
COMPOSITION ANTI-RASSISEMENT ET PRODUITS DE BOULANGERIE COMPRENANT CETTE COMPOSITION

(30) Priority: 27.02.2004 EP 04075617
(43) Date of publication of application: 06.12.2006
(73) Proprietor: UNILEVER N.V., 3013 AL Rotterdam (NL); UNILEVER PLC, London EC4P 4BQ (GB)
(72) Inventor: VELDHUIZEN, Yvonne S.J Unilever R & D Vlaardingen, NL-3133 AT Vlaardingen (NL); WEEGELS, Peter L. Unilever R & D Vlaardingen, NL-3133 AT Vlaardingen (NL)
(74) Representative: Joppe, Hermina Laura Petronella
(86) International application number: PCT/EP2005/001059
(87) International publication number: WO 2005/084445

(56) References cited:
- EP-A- 0 948 265
- EP-A- 1 003 388
- EP-A- 1 275 309
- WO-A-02/082929
- WO-A-03/055324
- US-A1- 2002 016 317
- DATABASE WPI Section Ch, Week 200263 Derwent Publications Ltd., London, GB; Class D13, AN 2002-587151 XP002288608 & JP 2002 206100 A (ASAHI DENKA KOGYO KK) 26 July 2002 (2002-07-26)
- DATABASE WPI Section Ch, Week 200372 Derwent Publications Ltd., London, GB; Class D13, AN 2003-759329 XP002288564 & JP 2003 160795 A (ASAHI DENKA KOGYO KK) 6 June 2003 (2003-06-06)

## Description

### Field of the invention

The invention relates to bakery products having improved softness and which are less susceptible to staling on storage.

### Background to the invention

Soft bakery products such as bread, cake, doughnuts are widely consumed as part of daily food intake.

The freshness of these products, especially of bread, is generally appreciated by consumers. One of the parameters determining the perception of freshness is the softness of the bakery product. It is generally considered that the softer the bakery product is, the fresher it is. Furthermore it is desired that this softness be maintained when the bakery product is stored. Reduction of product softness, which may partly be due to drying of the product, is known in the art as staling of the products.

To prevent staling, anti-staling agents are added to bakery compositions. Anti-staling agents known in the art are e.g. emulsifiers such as calcium stearoyl lactylate (CSL), SSL and glycerolmonostearate.
Alternative anti-staling agents are enzymes or mixtures of enzymes. For example bacterial amylases or maltogenic amylases may be added to bread dough as anti-staling agents.

Although these anti-staling agents give some improvement in maintaining the softness of bakery compositions, especially bread, further improvement is desired.

It is an object of the invention to provide bakery product compositions providing a bakery product, which is soft and stays soft on storage.

### Definition of the invention

It has surprisingly been found that bakery products comprising a sterol and/or stanol ester of fatty acids in combination with an emulsifier selected from the group comprising calcium stearoyl lactylate, sodium stearoyl lactylate, glycerol monostearate, sodium stearoyl fumarate, succinilated monoglyceride, ethoxylated mono- and diglycerides, diacetyl tartaric acid esters of mono- and diglycerides, propylene glycol monoesters, polyglycerolesters, sorbitan esters or polysorbates, lecithin or a combination thereof, are soft and show a reduced staling on storage.

Therefore the invention relates to a Bakery product comprising flour and from 0.5 to 15 wt% on flour of sterol and/or stanol fatty acid ester and from 0.1 to 1 wt% of emulsifier on flour, wherein the emulsifier is selected from the group comprising calcium stearoyl lactylate, sodium stearoyl lactylate, glycerol monostearate, sodium stearoyl fumarate, succinilated monoglyceride, ethoxylated mono- and diglycerides, diacetyl tartaric acid esters of mono- and diglycerides, polyglycerol esters, propylene glycol monoesters, polyglycerolesters, sorbitan esters or polysorbates, lecithin or a combination thereof preferably the weight ratio of the emulsifier to sterol ester or stanol ester or the combination thereof is between 1 to 1 and 1 to 50.

In a further aspect the invention relates to bakery products comprising the anti-staling composition.

### Detailed description of the invention

In the context of this specification and claims all percentage is a weight percentage on total weight of the flour in the bakery composition.

Where reference is made to a sterol or stanol ester, the ester of sterol or stanol and a fatty acid is meant.

The bakery product according to the invention comprises a sterol and/or stanol fatty acid ester.

Sterols or phytosterols, also known as plant sterols or vegetable sterols can be classified in three groups, 4-desmethylsterols, 4-monomethylsterols and 4,4'-dimethylsterols. In oils they mainly exist as free sterols and sterol esters of fatty acids although sterol glucosides and acylated sterol glucosides are also present. There are three major phytosterols namely beta-sitosterol, stigmasterol and campesterol. Schematic drawings of the components meant are as given in "Influence of Processing on Sterols of Edible Vegetable Oils", S.P. Kochhar; Prog. Lipid Res. 22: pp. 161-188.

The respective 5-alpha- saturated derivatives such as sitostanol, campestanol and ergostanol and their derivatives are in this specification referred to as stanols.

Preferably the sterol or stanol is selected from the group comprising fatty acid ester of β-sitosterol, β-sitostanol, campesterol, campestanol, stigmasterol, brassicasterol, brassicastanol or a mixture thereof.

Products comprising sterol or stanol are known in the art. WO-A-03/055324 discloses bread rolls comprising sterol esters. These compositions do not contain an emulsifier.

WO-A-02/82929 discloses compositions comprising sterolester and fibre. Application of these compositions in a bakery product is disclosed.

US-A-2002/0016317 discloses a peanut spread comprising sterolester.

EP-A-1275309 discloses a spread comprising sterolester and a low amount of emulsifier.
WO9858554 discloses the use of sterols or stanols to prevent staling.
The sterols in the current invention are esterified with a fatty acid. Preferably the sterols are esterified with one or more C₂₋₂₂ fatty acids. For the purpose of the invention the term C₂₋₂₂ fatty acid refers to any molecule comprising a C₂₋₂₂ main chain and at least one acid group. Although not preferred within the present context the C₂₋₂₂ main chain may be partially substituted or side chains may be present. Preferably, however the C₂₋₂₂ fatty acids are linear molecules comprising one or two acid group (s) as end group (s). Most preferred are linear C₈₋₂₂ fatty acids as these occur in natural oils.

Suitable examples of any such fatty acids are acetic acid, propionic acid, butyric acid, caproic acid, caprylic acid, capric acid. Other suitable acids are for example citric acid, lactic acid, oxalic acid and maleic acid. Most preferred are myristic acid, lauric acid, palmitic acid, stearic acid, arachidic acid, behenic acid, oleic acid, cetoleic acid, erucic acid, elaidic acid, linoleic acid and linolenic acid.

When desired a mixture of fatty acids may be used for esterification of the sterols. For example, it is possible to use a naturally occurring fat or oil as a source of the fatty acid and to carry out the esterification via an interesterification reaction.

In a preferred embodiment, the fatty acid in the esterified sterol or stanol is derived from sunflower oil, rapeseed oil, safflower oil, coconut oil, or a mixture thereof.
Most preferred the fatty acid in the esterified sterol or stanol is derived from sunflower oil because this leads to the best reduction in staling rate.

Because of improved initial softness and reduced staling, the inclusion of a sterolester is preferred over the inclusion of a stanolester.

According to an alternative embodiment, the bakery product comprises a combination of a sterolester and a stanolester.

The bakery product further comprises an emulsifier selected from the group comprising calcium stearoyl lactylate (CSL), sodium stearoyl lactylate (SSL), glycerol monostearate (GMS), sodium stearoyl fumarate, succinilated monoglyceride, ethoxylated mono- and diglycerides, diacetyl tartaric acid esters of mono- and diglycerides, propylene glycol monoesters, polyglycerolesters, sorbitan esters or polysorbates, lecithin or a combination thereof.

It was found that the combination of the emulsifier and the sterol or stanol fatty acid ester has a surprisingly good effect on the increase of the softness and decrease of the staling rate of bread and other bakery products. Moreover the combination of ingredients also has a positive effect on bread volume. The method to determine staling and the method to determine softness and bread volume are described in the examples.

Preferably the emulsifier is selected from the group comprising calcium stearoyl lactylate (CSL), sodium stearoyl lactylate (SSL), glycerol monostearate (GMS) and diacetyl tartaric acid esters of mono- and diglycerides, or a combination thereof.

The most preferred emulsifiers are CSL and SSL.

To achieve optimal effect in anti-staling the weight ratio of the emulsifier to sterol ester or stanol ester or the combination thereof is between 1 to 1 and 1 to 50, preferably between 1 to 6 and 1 to 30.

The amount of emulsifier is preferably from 0.05 to 0.6 wt%, more preferred from 0.15 to 0.3 wt% on flour.

The amount of sterolester or stanolester is preferably from 1 to 6 wt% on flour.

The preferred bakery product in this embodiment is bread.

In general bread is appreciated for its taste, crispiness of the crust, airiness evidenced by a certain volume, crumb softness, low staling rate of the crumb during storage, and general impression of healthiness due to the presence of grains and fibres.

The method to determine softness is described in the examples. The softness is preferably from 200 to 300, more preferred 200 to 260 g determined according to this method.

Staling is determined as the reduction of softness over time. Preferred products have a staling rate of less than 100 g per day for a period of at least 5 days after baking.

The bread according to the invention may have any suitable shape, however loaf breads, buns, and French sticks are preferred.

In a preferred embodiment, the volume of tin bread is preferably above 5 l/kg after baking and cooling down for 2 hours.

It was found that bakery products comprising the anti-staling composition according to the invention were much appreciated especially because of the crumb softness and the low staling rate. Also in some cases the volume was relatively high.

The bakery products comprise conventional ingredients in addition to the anti-staling composition.

Where the bakery product is bread, the compositions generally comprise flour and preferably also salt and yeast. Furthermore dough optionally comprises one or more leavening agents.

Examples of suitable flour are whole meal, wheat flour, rye/wheat mixtures, high gluten flour or combinations thereof. Suitable leavening agents are yeast, baking powder, sodium carbonate, sodium hydrogen carbonate. The amount and ratio of flour, water and leavening agent will be determined by the person skilled in the art depending on the type of bread that is desired.

Optional further ingredients are preferably selected from the group comprising fats, enzymes, other emulsifiers than those that are part of the anti-staling composition, sugar, fruit pieces such as riasins, nuts, amino acids, colourants, preservatives, flavours and combinations thereof.

Optionally the bakery product comprises a bread improver composition which preferably comprises a combination of carboxymethylcellulose and at least one other type of fibre such as inulin.

The bakery products may be prepared in any suitable process. The anti-staling composition may be added as such whereby the sterol and/or stanol ester and the emulsifier are pre-mixed or may be added as individual ingredients wherein the sterol and/or stanol ester is individually added and so is the emulsifier.

Generally known processes to make bread may include any of the following steps: mixing and kneading the ingredients, dividing, proofing, moulding, proofing, baking and cooling, or optionally in-stead of baking: parbaking, cooling, freezing, (optionally thawing) and baking off, or optionally after proofing: freezing, thawing (optionally), proofing and baking.

A preferred process for preparing the bakery composition comprises the steps of providing a mixture comprising at least flour, sterol ester or stanol ester, emulsifier selected from the group according to the invention, optionally bread improver containing enzymes (amylase, xylanase), ascorbic acid, water, salt and yeast, followed by kneading, dividing, optionally proving, optionally moulding, baking and cooling. Optionally the products are frozen before baking or after partial baking.

Alternatively any process that is currently used for making bread can be used. The time of addition of the sterol/stanolester during mixing is not important, but the earlier during mixing it is added the better it can be distributed through the dough.

The bread prepared with the bread improver composition can be stored at ambient temperature, chilled or frozen. The bread is preferably stored frozen for optimal shelf life. If required, the bread can be baked-off shortly before consumption.

According to another embodiment, the invention relates to a bakery product comprising flour and from 0.5 to 15 wt% on flour, preferably 1 to 6 wt% on flour of sterol fatty acid ester and/or stanol fatty acid ester and from 0.1 to 1 wt%, preferably 0.1 to 0.5 wt% emulsifier on flour, wherein the emulsifier is selected from the group comprising calcium stearoyl lactylate, sodium stearoyl lactylate, glycerol monostearate, sodium stearoyl fumarate, succinilated monoglyceride, ethoxylated mono- and diglycerides, diacetyl tartaric acid esters of mono- and diglycerides, polyglycerol esters, propylene glycol monoesters, sorbitan esters or polysorbates, lecithin or a combination thereof, more preferred from the group comprising CSL, SSL, GMS and DATEM or a combination thereof.

The invention is illustrated by the following non-limiting examples.

### Examples

### General

### Texture profile analyses

The firmness of the crumb was measured by texture profile analysis (c.f. AACC analytical method 74-09) at 1, 4 and 5 days after baking and storage at 20°C. The firmness of the bread, extrapolated at 0 days of storage and the staling rate were calculated.

### Bread volume

The bread volume was determined by the rapeseed displacement method and expressed in volume/kg.

### Example 1; Bread comprising sterolester and CSL

Bread was prepared in a conventional process comprising the steps of providing a mixture comprising the ingredients as specified in table 1, followed by kneading, dividing, proving, baking and cooling.

**Table 1 Bread recipe and quality of bread with Sterolester and CSL (amounts in g)**

| Ingredients | Example 1a | Example 1b | Example 1c |
|---|---|---|---|
| flour | 1000 | 1000 | 1000 |
| yeast | 20 | 20 | 20 |
| salt | 20 | 20 | 20 |
| sugar | 15 | 15 | 15 |
| Sterolester² | 15 | 30 | 60 |
| CSL2010 | 4 | 4 | 4 |
| water | 570 | 570 | 570 |
| vitamin C | 0.05 | 0.05 | 0.05 |
| Biobake Pconc | 0.02 | 0.02 | 0.02 |
| Maxlife E5 | 0.2 | 0.2 | 0.2 |
| Biobake ST 710 | 0.1 | 0.1 | 0.1 |
| Specific volume (l/kg) | 5.64 | 5.81 | 5.65 |
| Firmness index (%)¹ | 80% | 68% | 74% |
| Staling rate index (%)¹ | 82% | 77% | 86% |

| | | | |
|---|---|---|---|
| ¹as indexed on control ²sterolester is an ester of mainly beta sitosterol, esterified with sunflower oil. | | | |

**Table 2: composition of comparison examples for example 1**

| Ingredients | control | Control + CSL | Sterol ester 1d | Sterolester 1e | Sterol ester 1f |
|---|---|---|---|---|---|
| flour | 1000 | 1000 | 1000 | 1000 | 1000 |
| yeast | 20 | 20 | 20 | 20 | 20 |
| salt | 20 | 20 | 20 | 20 | 20 |
| sugar | 15 | 15 | 15 | 15 | 15 |
| sterolester | | | 15 | 30 | 60 |
| CSL2010 | | 4 | | | |
| water | 570 | 570 | 570 | 570 | 570 |
| vitamin C | 0.05 | 0.05 | 0.05 | 0.05 | 0.05 |
| Biobake Pconc | 0.02 | 0.02 | 0.02 | 0.02 | 0.02 |
| Maxlife E5 | 0.2 | 0.2 | 0.2 | 0.2 | 0.2 |
| Biobake ST 710 | 0.1 | 0.1 | 0.1 | 0.1 | 0.1 |
| Specific volume (l/kg) | 5.39 | 5.51 | 5.40 | 5.36 | 5.22 |
| Firmness index (%)¹ | 100% | 74% | 122% | 101% | 94% |
| Staling rate index (%)¹ | 100% | 85% | 103% | 115% | 74% |

| | | | | | |
|---|---|---|---|---|---|
| ¹as indexed on control ²sterolester is an ester of mainly beta sitosterol, esterified with sunflower oil. | | | | | |

The results in Tables 1 and 2 show that CSL alone hardly affects the bread volume and reduces the firmness and staling rate. In contrast sterolesters alone have no influence on volume and increase the firmness or staling rate compared with a bread without sterolesters. The combination of sterolesters and CSL improves the volume slightly. Surprisingly, it substantially decreases the firmness and reduces the staling rate.

### Example 2

### Bread comprising stanolester and CSL

The process of example 1 was used.

**Table 3 Bread recipe and quality of bread stanolester and CSL**

| Ingredients | Example 2a | Example 2b | Example 2c |
|---|---|---|---|
| flour | 1000 | 1000 | 1000 |
| yeast | 20 | 20 | 20 |
| salt | 20 | 20 | 20 |
| sugar | 15 | 15 | 15 |
| Stanolester² | 15 | 30 | 60 |
| CSL2010 | 4 | 4 | 4 |
| water | 570 | 570 | 570 |
| vitamin C | 0.05 | 0.05 | 0.05 |
| Biobake Pconc | 0.02 | 0.02 | 0.02 |
| Maxlife E5 | 0.2 | 0.2 | 0.2 |
| Biobake ST 710 | 0.1 | 0.1 | 0.1 |
| Specific volume (l/kg) | 5.60 | 5.63 | 5.50 |
| Firmness index (%)¹ | 72% | 90% | 95% |
| Staling rate index (%)¹ | 78% | 80% | 93% |

| | | | |
|---|---|---|---|
| ¹as indexed on control ²stanolester is an ester of mainly beta sitostanol, esterified with sunflower oil. | | | |

**Table 4; comparison examples for example 2**

| Ingredients | control | Control + CSL | Stanol ester 2e | Stanol ester 2f | Stanol ester 2g |
|---|---|---|---|---|---|
| flour | 1000 | 1000 | 1000 | 1000 | 1000 |
| yeast | 20 | 20 | 20 | 20 | 20 |
| salt | 20 | 20 | 20 | 20 | 20 |
| sugar | 15 | 15 | 15 | 15 | 15 |
| stanolester | | | 15 | 30 | 60 |
| CSL2010 | | 4 | | | |
| water | 570 | 570 | 570 | 570 | 570 |
| vitamin C | 0.05 | 0.05 | 0.05 | 0.05 | 0.05 |
| Biobake Pconc | 0.02 | 0.02 | 0.02 | 0.02 | 0.02 |
| Maxlife E5 | 0.2 | 0.2 | 0.2 | 0.2 | 0.2 |
| Biobake ST 710 | 0.1 | 0.1 | 0.1 | 0.1 | 0.1 |
| Specific volume (l/kg) | 5.39 | 5.51 | 5.51 | 5.32 | 5.10 |
| Firmness index (%)¹ | 100% | 74% | 118% | 128% | 116% |
| Staling rate index (%)¹ | 100% | 85% | 103% | 133% | 90% |

| | | | | | |
|---|---|---|---|---|---|
| ¹as indexed on control ²stanolester is an ester of mainly beta sitostanol, esterified with sunflower oil. | | | | | |

The results in Table 3 and 4 show that CSL alone hardly affects the bread volume and reduces the firmness and staling rate. In contrast stanolesters alone have no influence on volume and increase the firmness or staling rate compared with a bread without stanolesters. They are even more deleterious than the sterolesters. The combination of stanolesters and CSL improves the volume slightly. Surprisingly it substantially decreases the firmness and reduces the staling rate.

## Claims

1. Bakery product comprising flour and from 0.5 to 15 wt% on flour of sterol and/or stanol fatty acid ester and from 0.1 to 1 wt% of emulsifier on flour, wherein the emulsifier is selected from the group comprising calcium stearoyl lactylate, sodium stearoyl lactylate, glycerol monostearate, sodium stearoyl fumarate, succinilated monoglyceride, ethoxylated mono- and diglycerides, diacetyl tartaric acid esters of mono- and diglycerides, polyglycerol esters, propylene glycol monoesters, polyglycerolesters, sorbitan esters or polysorbates, lecithin or a combination thereof.

2. Bakery product according to claim 1, wherein the weight ratio of the emulsifier to sterol ester or stanol ester or the combination thereof is between 1 to 1 and 1 to 50.

3. Bakery product according to claim 1, wherein the emulsifier is selected from the group comprising calcium stearoyl lactylate, sodium stearoyl lactylate, glycerol monostearate and diacetyl tartaric acid esters of mono- and diglycerides or a combination thereof.

4. Bakery product according to claim 1, wherein the emulsifier is selected from the group comprising calcium stearoyl lactylate, sodium stearoyl lactylate, glycerol monostearate or a combination thereof.

5. Bakery product according to claim 1 wherein the emulsifier is CSL or SSL.

6. Bakery product according to claim 1 wherein the fatty acid is derived from sunflower oil, rapeseed oil, safflower oil, coconut oil or a mixture thereof.

7. Bakery product according to claim 1 which comprises a sterolester.

8. Bakery product according to claim 1 wherein the weight ratio of the emulsifier to sterol is between 1 to 6 and 1 to 30.

## Patentansprüche

1. Backerzeugnis, umfassend Mehl und 0,5 bis 15 Gew.-%, bezogen auf Mehl, Sterol-und/oder Stanolfettsäureester und 0,1 bis 1 Gew.-%, bezogen auf Mehl, Emulgator, wobei der Emulgator aus der Gruppe, umfassend Calciumstearoyllactylat, Natriumstearoyllactylat, Glycerinmonostearat, Natriumstearoylfumarat, succinyliertes Monoglycerid, ethoxylierte Mono- und Diglyceride, Diacetylweinsäureester von Mono- und Diglyceriden, Polyglycerinester, Propylenglykolmonoester, Polyglycerinester, Sorbitanester und Polysorbate, Lecithin oder eine Kombination davon, ausgewählt ist.

2. Backerzeugnis nach Anspruch 1, wobei das Gewichtsverhältnis des Emulgators zu Sterolester oder Stanolester oder der Kombination davon zwischen 1 zu 1 und 1 zu 50 liegt.

3. Backerzeugnis nach Anspruch 1, wobei der Emulgator aus der Gruppe, umfassend Calciumstearoyllactylat, Natriumstearoyllactylat, Glycerinmonostearat und Diacetylweinsäureester von Mono- und Diglyceriden oder eine Kombination davon, ausgewählt ist.

4. Backerzeugnis nach Anspruch 1, wobei der Emulgator aus der Gruppe, umfassend Calciumstearoyllactylat, Natriumstearoyllactylat, Glycerinmonostearat oder eine Kombination davon, ausgewählt ist.

5. Backerzeugnis nach Anspruch 1, wobei der Emulgator CSL oder SSL ist.

6. Backerzeugnis nach Anspruch 1, wobei die Fettsäure aus Sonnenblumenöl, Rapssamenöl, Safloröl, Kokosnussöl oder einem Gemisch davon stammt.

7. Backerzeugnis nach Anspruch 1, welches einen Sterolester umfasst.

8. Backerzeugnis nach Anspruch 1, wobei das Gewichtsverhältnis des Emulgators zu Sterol zwischen 1 zu 6 und 1 zu 30 liegt.

## Revendications

1. Produit de boulangerie comprenant de la farine et de 0,5 à 15 % en poids, par rapport à la farine, d'ester de l'acide gras de stérol et/ou de stanol, ainsi que 0,1 à 1 % en poids, par rapport à la farine, d'émulsifiant, l'émulsifiant étant choisi dans le groupe comprenant le stéaroyl lactylate de calcium, le stéaroyl lactylate de sodium, le monostéarate de glycérol, le stéaroyl fumarate de sodium, le monoglycéride succinylé, les mono- et diglycérides éthoxylés, les esters de l'acide diacétyltartrique des mono- et diglycérides, les esters de polyglycérol, les monoesters de propylèneglycol, les esters de sorbitane ou polysorbates, la lécithine ou une combinaison de ceux-ci.

2. Produit de boulangerie selon la revendication 1, dans lequel le rapport pondéral entre l'émulsifiant et l'ester de stérol ou l'ester de stanol ou la combinaison de ceux-ci est compris entre 1 à 1 et 1 à 50.

3. Produit de boulangerie selon la revendication 1, dans lequel l'émulsifiant est choisi dans le groupe comprenant le stéaroyl lactylate de calcium, le stéaroyl lactylate de sodium, le monostéarate de glycérol et les esters de l'acide diacétyltartrique des mono- et diglycérides ou une combinaison de ceux-ci.

4. Produit de boulangerie selon la revendication 1, dans lequel l'émulsifiant est choisi dans le groupe comprenant le stéaroyl lactylate de calcium, le stéaroyl lactylate de sodium, le monostéarate de glycérol ou une combinaison de ceux-ci.

5. Produit de boulangerie selon la revendication 1, dans lequel l'émulsifiant est le CSL ou le SSL.

6. Produit de boulangerie selon la revendication 1, dans lequel l'acide gras est issu de l'huile de tournesol, de l'huile de colza, de l'huile de carthame, de l'huile de coco ou d'un mélange de celles-ci.

7. Produit de boulangerie selon la revendication 1 comprenant un ester de stérol.

8. Produit de boulangerie selon la revendication 1, dans lequel le rapport pondéral entre l'émulsifiant et le stérol est compris entre 1 à 6 et 1 à 30.
